# EUROPEAN PATENT SPECIFICATION

(11) **EP 3 753 915 B1**
(45) Date of publication and mention of the grant of the patent: **08.02.2023**
(21) Application number: 18906315.9
(22) Date of filing: 14.02.2018
(51) Int. Cl.: C05G 3/90, A01N 43/90, C05D 9/02, C05C 9/00, A01N 37/06, A01N 37/10, A01N 43/60

(54) **USE OF A COMPOUND WITH BIOSTATIC ACTIVITY AS AGRONOMIC ADDITIVE FOR FERTILISERS INCLUDING UREA, UREASE INHIBITORS AND BIOSTIMULANTS**
VERWENDUNG EINER VERBINDUNG MIT BIOSTATISCHER AKTIVITÄT ALS AGRONOMISCHER ZUSATZSTOFF FÜR DÜNGEMITTEL, EINSCHLIESSLICH UREA, UREASE-INHIBITOREN UND BIOSTIMULANTIEN
UTILISATION D'UN COMPOSÉ À ACTIVITÉ BIOSTATIQUE COMME ADDITIF AGRONOMIQUE POUR ENGRAIS COMPRENANT DE L'URÉE, DES INHIBITEURS D'URÉASE ET DES BIOSTIMULANTS

(43) Date of publication of application: 23.12.2020
(73) Proprietor: Fertinagro Biotech, S.L., 44195 Teruel (ES)
(72) Inventor: ATARES REAL, Sergio, 44195 Teruel (ES); ROMERO LOPEZ, Joaquin, 44195 Teruel (ES); NARANJO OLIVERO, Miguel Angel, 44195 Teruel (ES); SALAET MADORRAN, Ignasi, 44195 Teruel (ES); FERRER GINES, María, 44195 Teruel (ES); YANCE CHAVEZ, Tula del Carmen, 44195 Teruel (ES)
(74) Representative: González López-Menchero, Álvaro Luis
(86) International application number: PCT/ES2018/070107
(87) International publication number: WO 2019/158784

(56) References cited:
- WO-A1-2017/029421
- CN-A- 104 072 258
- CN-A- 104 876 671
- CN-A- 104 876 673
- CN-A- 106 242 831
- CN-A- 107 417 423

## Description

The present invention relates to the use of a solution of a compound with biostatic activity selected from potassium sorbate, potassium propionate, nisin, potassium benzoate and pulcherriminic acid or its iron chelate, pulcherrimin, as agronomic additive for fertiliser products including urea, urease inhibitors and biostimulants, being such biostimulants any individual substance or mixture of substances the application of which stimulates biological processes and, therefore, improves the availability of nutrients and optimizes the absorption thereof by the plants, wherein the biostimulants are selected among amino acids, saccharides, humic or fulvic acids, organic acids, yeast extracts, algae extracts and combinations thereof.

More specifically, the invention provides an agronomic additive to be added to a fertiliser product, wherein the fertiliser includes urea, urease inhibitors, such as N-(n-butyl)thiophosphoric acid triamide (NBTP), acetohydroxamic acid (AHA), cyclohexyl phosphoric triamide (CHPT), thiophosphoryl triamide (TPT), cyclohexyl thiophosphotriamide (CHTPT), phenyl phosphorodiamidiate (PPD/PPDA), phosphorus triamide (PT), thiopyridines, N-halo-2-oxazolidinone or combinations thereof, and biostimulants, such as amino acids, saccharides, humic or fulvic acids, organic acids, yeast extracts, algae extracts and similar and combinations thereof in its formulation.

The agronomic additive for use according to the present invention_is a compound with biostatic activity selected from potassium sorbate, potassium propionate, nisin, potassium benzoate and pulcherriminic acid or its iron chelate, pulcherrimin.

Urea is one of the most widely used synthesis nitrogen fertilisers, due to its high nitrogen content (46%), low cost, water solubility and ease of use. However, it performs poorly and loses effectiveness due to the leaching of nitrogen in nitric form and to the loss of ammoniacal nitrogen through volatilisation due to the rapid hydrolysis of urea when applied to soils. Thus, its chemical properties may result in the loss of nitrogen after application, wherein said losses may vary depending on the type of soil and weather conditions. These losses occur during the decomposition of urea in the soil, with the formation and release of ammonia gas (NH₃) and ammonia ions (NH₄⁺) into the atmosphere. This process, called hydrolysis of urea, is catalysed by the urease enzyme, a metalloenzyme the active site of which is composed of a Ni (II) dimer, which is produced by the plants and bacteria in the soil.

(NH₂)₂CO + H₂O → CO₂ + 2NH₃

NH₃ + H₂O → NH₄⁺ + OH⁻.

It is a very fast-acting enzyme and causes a high degree of loss of effectiveness in the fertiliser applied. Similarly, the ammonia released may have an excessively high concentration near the roots of young plants, poisoning them, in addition to being released into the environment, with the ensuing problems.

For example, the contamination of bodies of water and springs due to the presence of nitrates is one of the major environmental problems in developed countries. This fact, normally associated with the excessive use of nitrogen fertilisers, has given rise to the enactment of specific laws aimed at regulating the maximum amount of nitrogenated units that farmers can apply depending on the degree of contamination in their specific region. In this context, any research aimed at the development of more effective fertilisers and with less risk of environmental contamination is of great interest.

The products which have shown to be most effective in this regard include, namely, inhibitors of nitrification and urea hydrolysis processes (Hauck, R. D., "Slow-release and bioinhibitor-amended nitrogen fertilizers", in Fertilizer technology and use, Ed. O P Engelstad, pp. 293-322, Soil Science Society of America, 1985 Madison). In relation to urea hydrolysis inhibitors, a large number of molecules of both natural and synthetic origin have been developed (see, for example, Baughman and Wozniak., US5549728; Seiyaku, JP8019595, Cheng et al., US5770771; Peacock et al., US5352265; Radel, US4932992).

The different compounds that can be used as urease inhibitors include, namely, structural analogs of urea, phosphoroamides, and thiophosphoroamides, and also hydroquinones and benzoquinones. The inhibiting capacity of soil urease activity of three phosphoroamides, for example NBPT, TPT and PP, over time differs widely. The inhibiting effect of soil NBPT is greater than that of other inhibitors, lasting up to 28 days after being applied to the soil. This period increases with the dose of the inhibitor applied and decreases with soil temperature (Bremmer, McCartya, Higuchi, 1991. Communications in Soil Science and Plant Analysis. Volume 22. pp. 1519-1526).

These urease inhibitors include, more specifically, N-(n-butyl)thiophosphoric acid triamide (NBTP), acetohydroxamic acid (AHA), cyclohexyl phosphoric triamide (CHPT), thiophosphoryl triamide (TPT), cyclohexyl thiophosphotriamide (CHTPT), phenyl phosphorodiamidiate (PPD/PPDA), phosphorus triamide (PT), thiopyridines, N-halo-2-oxazolidone, and particularly NBTP, N-(n-butyl)thiophosphoric acid triamide, highly effective in the inhibition of urea hydrolysis in soils.

NBPT and, to a similar extent, the aforementioned urease inhibitors for agricultural use, is a highly effective product for inhibiting urease activity, originating both in microorganisms (associated with activity in soils) and in plants, and has an average life in relation to the activity of between 3 weeks and 3 months (see, for example, EP0119487).

WO2017/029421 mA1 discloses a fertilizer composition including a nitrogen source, wherein such composition includes an extract of pulcherrimin as urease inhibitor. This document is silent about the use according to the invention of the a solution of a compound with biostatic activity selected from potassium sorbate, potassium propionate, nisin, potassium benzoate and pulcherriminic acid or its iron chelate, pulcherrimin, as agronomic additive for fertiliser products including urea, urease inhibitors and biostimulants, being such biostimulants any individual substance or mixture of substances the application of which stimulates biological processes and, therefore, improves the availability of nutrients and optimizes the absorption thereof by the plants, wherein the biostimulants are selected among amino acids, saccharides, humic or fulvic acids, organic acids, yeast extracts, algae extracts and combinations thereof.

Furthermore, the application of different biostimulant substances, such as amino acids, saccharides, humic or fulvic acids, organic acids, yeast extracts, algae extracts and similar, together with urea-based fertilisers, is a highly restricted option due to the nature of this type of biostimulants, since they are powerful inducers of microbiological life in the soil. This favours the reduction of the average life of most commercial urease inhibitors, such as NBPT, thereby reducing their effect and favouring the loss of nitrogen through volatilisation of ammonia. Thus, the application of urease action-inhibiting substances is highly influenced by the microbiological activity of the soil.

In the context of the present invention, biostimulant substance is understood to be any individual substance or mixture of substances the application of which stimulates biological processes and, therefore, improves the availability of nutrients and optimises the absorption thereof by the plants (as defined by the European Biostimulants Industry Council, EBIC).

Similarly, In the context of the present invention, compounds with biostatic activity are substances which inhibit the growth of microorganisms.

For example, it has been described that the average life of NBTP is reduced by microbiological activity (Richard E. Engel, "Degradation of the Urease Inhibitor NBPT as Affected by Soil pH" in Soil Science Society of America Journal Abstract - Soil Fertility & Plant Nutrition, 2015). It is also known that other potential urease inhibitors are also degraded by soil microorganisms. These molecules include hydroxamic acids (Francisco A. Macias, 2005) or urea derivatives such as thiourea (Lashen & Starkey. 1970; Gunther & Pestemer, 1990; Loehr & Matthews, 1992).

In light of the benefits of both types of compounds, urease inhibitors and biostimulants, for plants, it would be desirable to use them jointly in a urea-based fertiliser composition.

Thus, an objective of the present invention is to provide the use of_an agronomic additive that will favour, i.e. lengthen, the average life of urease inhibitors in soils when applied in a ureic fertiliser composition jointly with biostimulants.

According to the invention, this objective is achieved by providing an agronomic additive to be added to fertiliser products including urea, urease inhibitors, such as N-(n-butyl)thiophosphoric acid triamide (NBTP), acetohydroxamic acid (AHA), cyclohexyl phosphoric triamide (CHPT), thiophosphoryl triamide (TPT), cyclohexyl thiophosphotriamide (CHTPT), phenyl phosphorodiamidiate (PPD/PPDA), phosphorus triamide (PT), thiopyridines, N-halo-2-oxazolidinone or combinations thereof, and biostimulants, such as amino acids, saccharides, humic or fulvic acids, organic acids, yeast extracts, algae extracts and similar and combinations thereof, wherein the agronomic additive consists of a compound with biostatic activity selected from potassium sorbate, potassium propionate, nisin, potassium benzoate and pulcherriminic acid or its iron chelate, pulcherrimin.

In one embodiment of the invention, the additive for use according to the invention is added to the fertiliser product including urea, urease inhibitors and biostimulants in a urease inhibitors+biostimulant:additive ratio of 10:1 to 10:2.5.

In another embodiment of the invention, the amount of biostatic agent present in the agronomic additive ranges between 60 - 500 mg per kg of fertiliser product including urea, urease inhibitors and biostimulants.

In one embodiment, the agronomic additive for use according to the present invention is an aqueous-alcoholic solution of potassium sorbate, preferably a solution in a solvent mixture formed by water and propylene glycol, preferably in a propylene glycol:water ratio of 50:50 to 80:20 (by volume) at a concentration of 5-50%.

In another embodiment, the agronomic additive for use according to the present invention is an aqueous-alcoholic solution of potassium propionate, preferably a solution in a solvent mixture formed by water and propylene glycol, preferably in a propylene glycol:water ratio of 50:50 to 80:20 (by volume) at a concentration of 5-50%.

In yet another embodiment, the agronomic additive for use according to the present invention is an aqueous-alcoholic solution of nisin, preferably a solution in a solvent mixture formed by water and propylene glycol, preferably in a propylene glycol:water ratio of 50:50 to 80:20 (by volume) at a concentration of 5-50%.

In another embodiment, the agronomic additive for use according to the present invention is an aqueous-alcoholic solution of potassium benzoate, preferably a solution in a solvent mixture formed by water and propylene glycol, preferably in a propylene glycol:water ratio of 50:50 to 80:20 (by volume) at a concentration of 5-50%.

In yet another embodiment, the agronomic additive for use according to the present invention is an aqueous-alcoholic solution of pulcherriminic acid or pulcherrimin, preferably a solution in a solvent mixture formed by water and propylene glycol, preferably in a propylene glycol:water ratio of 50:50 to 80:20 (by volume) at a concentration of 5-50%.

In another embodiment of the invention, the agronomic additive for use according to the invention is added to the fertiliser product including urea, urease inhibitors and biostimulants in an amount of 1-2 liters of additive per ton of urea treated with urease inhibitor and biostimulant.

As mentioned earlier, the urease inhibitors used in the fertiliser product are N-(n-butyl)thiophosphoric acid triamide (NBTP), acetohydroxamic acid (AHA), cyclohexyl phosphoric triamide (CHPT), thiophosphoryl triamide (TPT), cyclohexyl thiophosphotriamide (CHTPT), phenyl phosphorodiamidiate (PPD/PPDA), phosphorus triamide (PT), thiopyridines, N-halo-2-oxazolidinone or combinations thereof, preferably NBTP, AHA or combinations of NBTP and AHA.

In use, in a preferred embodiment, 0.1-0.2% of the additive of the invention, containing a biostatic concentration between 5-50%, preferably a fertiliser including between 0.05-0.2% of urease inhibitor and between 0.05-2% of a biostimulant, is added, the remainder being up to 100% of urea.

In the present description, all percentages are expressed as percentages by weight. Similarly, amino acids, saccharides, humic or fulvic acids, organic acids (citric acid), yeast extracts, algae extracts and similar and combinations thereof are used herein as biostimulants.

In this regard, the algae extracts are specifically extracts of brown algae (Phaeophyta), for example *Ascophyllum nodosum*, *Laminaria sp*., *Fucus sp*., *Macrocystis pyrifera*, *Ecklonia maxima* or *Durvillea sp*., which are a source of complex polysaccharides, sugars and higher alcohols, phytohormones, oligoelements and antioxidants. Furthermore, yeast extracts are rich in amino acids and other nutrients that improve crop yield. Glutamic acid is particularly adequate as an amino acid in this invention, although aspartic acid, serine, histidine, glycine, threonine, arginine, alanine, tyrosine, valine, methionine, phenylalanine, isoleucine, leucine, lysine, proline and mixtures of these amino acids can also be used.

### Examples

Different assays were performed to ascertain the average life of different soil urease activity inhibitors when applied jointly with biostimulants such as amino acids, organic acids, saccharides (mono, di or polysaccharides), nucleotides or humic acids. In order to measure the effect of the agronomic additive of the invention, said additive consisting of a biostatic agent was added to the urease activity-inhibiting compositions and biostimulants.

In all the examples, a soil with the following features was used:

| | |
|---|---|
| pH | 8.35 |
| Conductivity | 0.272 dS/m |
| Organic matter | 1.37% |
| C/N ratio | 9.2 |
| Texture | 53.5% Sand; 19.9% Silt; 26.6% Clay |

### Example 1: Influence of the biostatic agent in the stability of NBTP with different biostimulants

An amount of 50 mg/kg of NBTP was applied to a soil with the aforementioned features. In the different assays, the NBTP was accompanied by different biostimulants at a concentration of 100 mg/kg. Lastly, a third group of assays were performed wherein NBPT, biostimulants and a concentration of 25 mg/kg of an additive according to the invention were added. The soils were incubated at a constant temperature of 25°C and a constant relative humidity of 20% for 8 days. After this time, a soil sample was taken and the % of NBPT remaining therein was analysed through HPLC-MS. By way of control, a soil was used with the same amount of NBTP not including biostimulants and including NBTP and biostimulants in the aforementioned amounts without adding the additive of the invention.

| % of NBTP remaining in the soil with respect to the initial 50 mg/kg of NBTP control after 8 days | |
|---|---|
| NBTP alone | 58.1 |
| NBTP + amino acids | 12.3 |
| NBTP + glucose | 14.3 |
| NBTP + humic acids | 37.7 |
| NBTP + citric acid | 21.4 |
| NBTP + guanosine-triphosphate | 39.6 |
| NBTP + yeast extract | 10.1 |
| NBTP + algae extract | 16.8 |

| % of NBTP remaining in the soil with respect to the initial 50 mg/kg of NBTP control after 8 days with potassium sorbate as a biostatic agent | |
|---|---|
| NBTP alone | 61.9 |
| NBTP + amino acids | 47.8 |
| NBTP + glucose | 45.1 |
| NBTP + humic acids | 56.5 |
| NBTP + citric acid | 54.8 |
| NBTP + guanosine-triphosphate | 55.3 |
| NBTP + yeast extract | 39.9 |
| NBTP + algae extract | 41.2 |

| % of NBTP remaining in the soil with respect to the initial 50 mg/kg of NBTP control after 8 days with potassium propionate as a biostatic agent | |
|---|---|
| NBTP alone | 57.9 |
| NBTP + amino acids | 42.1 |
| NBTP + glucose | 41.7 |
| NBTP + humic acids | 51.2 |
| NBTP + citric acid | 56.8 |
| NBTP + guanosine-triphosphate | 50.7 |
| NBTP + yeast extract | 42.1 |
| NBTP + algae extract | 37.8 |

| % of NBTP remaining in the soil with respect to the initial 50 mg/kg of NBTP control after 8 days | |
|---|---|
| % of NBTP remaining in the soil with respect to the initial 50 mg/kg of NBTP control after 8 days with nisin as a biostatic agent | |
| NBTP alone | 53.2 |
| NBTP + amino acids | 27.4 |
| NBTP + glucose | 29.5 |
| NBTP + humic acids | 47.2 |
| NBTP + citric acid | 41.8 |
| NBTP + guanosine-triphosphate | 40.8 |
| NBTP + yeast extract | 28.1 |
| NBTP + algae extract | 21.8 |

| % of NBTP remaining in the soil with respect to the initial 50 mg/kg of NBTP control after 8 days with potassium benzoate as a biostatic agent | |
|---|---|
| NBTP alone | 60.2 |
| NBTP + amino acids | 48.9 |
| NBTP + glucose | 44.1 |
| NBTP + humic acids | 40.2 |
| NBTP + citric acid | 56.8 |
| NBTP + guanosine-triphosphate | 55.2 |
| NBTP + yeast extract | 41.5 |
| NBTP + algae extract | 43.1 |

Of the data shown in the above table, it can be clearly observed how the application of a certain biostimulant at a concentration of 100 mg/kg together with the NBPT molecule at 50 mg/kg affects the average lifetime of the latter to a large extent. Eight days after application, the initial amount maintained in the absence of biostimulant changed from 58% to between 10-40% when applied jointly with a biostimulant. It can also be observed how the application of the additive at 25 mg/kg jointly with the biostimulant reverses the effect on the average life of NBPT with biostimulant to a certain extent.

### Example 2: Influence of the biostatic agent in the stability of AHA with different biostimulants

An amount of 100 mg/kg of AHA was applied to a soil with the aforementioned features. In the different assays, the AHA was accompanied by different biostimulants at a concentration of 50 mg/kg. Lastly, a third group of assays were performed wherein AHA, biostimulants and a concentration of 15 mg/kg of an additive according to the invention were added. The soils were incubated at a constant temperature of 25°C and a constant relative humidity of 20% for 8 days. After this time, a soil sample was taken and the % of AHA remaining therein was analysed through HPLC-MS. By way of control, a soil was used with the same amount of AHA not including biostimulants and AHA including biostimulants in the aforementioned amounts without adding the additive of the invention.

| % of AHA remaining in the soil with respect to the initial 100 mg/kg of AHA control after 8 days | |
|---|---|
| AHA alone | 63.0 |
| AHA + amino acids | 5.1 |
| AHA + glucose | 7.9 |
| AHA + humic acids | 40.7 |
| AHA + citric acid | 11.8 |
| AHA + guanosine-triphosphate | 21.9 |
| AHA + yeast extract | 4.9 |
| AHA + algae extract | 9.8 |

| % of AHA remaining in the soil with respect to the initial 100 mg/kg of AHA control after 8 days with potassium sorbate as a biostatic agent | |
|---|---|
| AHA alone | 72.1 |
| AHA + amino acids | 40.2 |
| AHA + glucose | 37.8 |
| AHA + humic acids | 61.8 |
| AHA + citric acid | 49.7 |
| AHA + guanosine-triphosphate | 40.3 |
| AHA + yeast extract | 27.9 |
| AHA + algae extract | 61.8 |

| % of AHA remaining in the soil with respect to the initial 100 mg/kg of AHA control after 8 days with potassium propionate as a biostatic agent | |
|---|---|
| AHA alone | 67.8 |

| % of AHA remaining in the soil with respect to the initial 100 mg/kg of AHA control after 8 days | |
|---|---|
| AHA + amino acids | 45.8 |
| AHA + glucose | 40.8 |
| AHA + humic acids | 67.8 |
| AHA + citric acid | 45.7 |
| AHA + guanosine-triphosphate | 59.7 |
| AHA + yeast extract | 40.3 |
| AHA + algae extract | 39.4 |

| % of AHA remaining in the soil with respect to the initial 100 mg/kg of AHA remaining in the soil control after 8 days with nisin as a biostatic agent | |
|---|---|
| AHA alone | 64.7 |
| AHA + amino acids | 28.1 |
| AHA + glucose | 19.7 |
| AHA + humic acids | 63.7 |
| AHA + citric acid | 40.8 |
| AHA + guanosine-triphosphate | 60.8 |
| AHA + yeast extract | 18.7 |
| AHA + algae extract | 40.8 |

| % of AHA remaining in the soil with respect to the initial 100 mg/kg of AHA remaining in the soil control after 8 days with potassium benzoate as a biostatic agent | |
|---|---|
| AHA alone | 62.1 |
| AHA + amino acids | 58.9 |
| AHA + glucose | 48.7 |
| AHA + humic acids | 68.1 |
| AHA + citric acid | 49.9 |
| AHA + guanosine-triphosphate | 61.7 |
| AHA + yeast extract | 43.8 |
| AHA + algae extract | 46.1 |

In this example, it can be clearly observed how the application of a certain biostimulant at a concentration of 50 mg/kg together with the AHA molecule at 100 mg/kg affects the average lifetime of the latter to a large extent. Three days after application, the initial amount maintained in the absence of the biostimulant changed from 63% to between 5-40% when applied jointly with a biostimulant. It can also be observed how the application of the additive at 15 mg/kg jointly with the biostimulant reverses the effect on the average life of the AHA of the biostimulant to a certain extent.

### Example 3: Influence of the biostatic agent in the stability of AHA+NBTP with pulcherriminic acid as a biostimulant

An amount of 50 mg/kg of AHA or NBTP was applied to a soil with the aforementioned features. In the different assays, the inhibitor was accompanied by different biostimulants at a concentration of 50 mg/kg. Lastly, a third group of assays were performed wherein the inhibitor, biostimulants and a concentration of 25 mg/kg of an additive according to the invention, in this case pulcherriminic acid, were added. The soils were incubated at a constant temperature of 25°C and a constant relative humidity of 20% for 3 and 8 days. After 3 days, a sample of soil treated with AHA was taken and the % of AHA remaining therein was analysed through HPLC-MS. After 8 days, a sample of soil treated with NBTP was taken and the % of NBTP remaining therein was analysed through HPLC-MS. By way of control, a soil was used with the same amount of AHA and NBTP not including biostimulants and including AHA and biostimulants in the aforementioned amounts without adding the additive of the invention.

| % of AHA remaining in the soil with respect to the initial 50 mg/kg of AHA control after 3 days | |
|---|---|
| AHA alone | 63.0 |
| AHA + amino acids | 5.1 |
| AHA + glucose | 7.9 |
| AHA + humic acids | 40.7 |
| AHA + citric acid | 11.8 |
| AHA + guanosine-triphosphate | 21.9 |
| AHA + yeast extract | 4.9 |
| AHA + algae extract | 9.8 |

| % of AHA remaining in the soil with respect to the initial 50 mg/kg of AHA control with pulcherriminic acid as a biostatic agent after 3 days | |
|---|---|
| AHA alone | 61.7 |
| AHA + amino acids | 7.5 |

| % of AHA remaining in the soil with respect to the initial 50 mg/kg of AHA control after 3 days | |
|---|---|
| AHA + glucose | 6.8 |
| AHA + humic acids | 38.9 |
| AHA + citric acid | 15.8 |
| AHA + guanosine-triphosphate | 25.6 |
| AHA + yeast extract | 7.2 |
| AHA + algae extract | 12.9 |

| % of AHA remaining in the soil with respect to the initial 50 mg/kg of NBTP control after 8 days | |
|---|---|
| NBTP alone | 57.6 |
| NBTP + amino acids | 14.2 |
| NBTP + glucose | 12.1 |
| NBTP + humic acids | 35.8 |
| NBTP + citric acid | 19.4 |
| NBTP + guanosine-triphosphate | 33.9 |
| NBTP + yeast extract | 15.8 |
| NBTP + algae extract | 12.9 |

| % of AHA remaining in the soil with respect to the initial 50 mg/kg of NBTP control with pulcherriminic acid as a biostatic agent after 8 days | |
|---|---|
| NBTP alone | 64.6 |
| NBTP + amino acids | 48.6 |
| NBTP + glucose | 42.1 |
| NBTP + humic acids | 55.8 |
| NBTP + citric acid | 55.7 |
| NBTP + guanosine-triphosphate | 48.9 |
| NBTP + yeast extract | 47.5 |
| NBTP + algae extract | 39.3 |

In this example, it can be clearly observed how the application of pulcherriminic acid reverses the effect of the different biostimulants on the average life of the assayed urease inhibitors to a large extent.

## Claims

1. Use of a solution of a compound with biostatic activity selected from potassium sorbate, potassium propionate, nisin, potassium benzoate and pulcherriminic acid or its iron chelate, pulcherrimin as agronomic additive for fertilizer products including urea, urease inhibitors and biostimulants, being such biostimulants any individual substance or mixture of substances the application of which stimulates biological processes and, therefore, improves the availability of nutrients and optimizes the absorption thereof by the plants, wherein the biostimulants are selected among amino acids, saccharides, humic or fulvic acids, organic acids, yeast extracts, algae extracts and combinations thereof.

2. Use of the agronomic additive, according to claim 1, **characterised in that** its amount ranges between 15-25 mg per kg of fertiliser product including urea, urease inhibitors and biostimulants.

3. Use of the agronomic additive, according to any of the preceding claims, **characterised in that** it is an aqueous-alcoholic solution of potassium sorbate, preferably a solution in a solvent mixture of water: propylene glycol of 20:80 to 50:50, at a concentration of 5-50% by weight.

4. Use of the agronomic additive, according to any of claims 1 to 3, **characterised in that** it is an aqueous-alcoholic solution of potassium propionate, preferably a solution in a solvent mixture of water: propylene glycol of 20:80 to 50:50, at a concentration of 5-50% by weight.

5. Use of the agronomic additive, according to any of claims 1 to 3, **characterised in that** it is an aqueous-alcoholic solution of nisin, preferably a solution in a solvent mixture of water:propylene glycol of 20:80 to 50:50, at a concentration of 5-50% by weight.

6. Use of the agronomic additive, according to any of claims 1 to 3, **characterised in that** it is an aqueous-alcoholic solution of potassium benzoate, preferably a solution in a solvent mixture of water: propylene glycol of 20:80 to 50:50, at a concentration of 5-50% by weight.

7. Use of the agronomic additive, according to any of claims 1 to 3, **characterised in that** it is an aqueous-alcoholic solution of pulcherriminic acid or pulcherrimin, preferably a solution in a solvent mixture of water-propylene glycol of 20:80 to 50:50, at a concentration of 5-50% by weight.

## Patentansprüche

1. Verwendung einer Lösung einer Verbindung mit biostatischer Aktivität, ausgewählt aus Kaliumsorbat, Kaliumpropionat, Nisin, Kaliumbenzoat und Pulcherriminsäure oder deren Eisenchelat, Pulcherrimin, als agronomischer Zusatzstoff für Düngemittelprodukte, die Harnstoff, Ureaseinhibitoren und Biostimulantien beinhalten, wobei solche Biostimulantien jede einzelne Substanz oder ein Gemisch von Substanzen sind, deren Anwendung biologische Vorgänge stimuliert und daher die Verfügbarkeit von Nährstoffen verbessert und deren Aufnahme durch die Pflanzen optimiert, wobei die Biostimulantien ausgewählt sind aus Aminosäuren, Sacchariden, Humin- oder Fulvosäuren, organische Säuren, Hefeextrakten, Algenextrakten und Kombinationen davon.

2. Verwendung des agronomischen Zusatzstoffes nach Anspruch 1, **dadurch gekennzeichnet, dass** seine Menge zwischen 15-25 mg pro kg Düngemittelprodukt, das Harnstoff, Ureaseinhibitoren und Biostimulantien beinhaltet, liegt.

3. Verwendung des agronomischen Zusatzstoffes nach einem der vorhergehenden Ansprüche, **dadurch gekennzeichnet, dass** es sich um eine wässrig-alkoholische Lösung von Kaliumsorbat, vorzugsweise eine Lösung in einem Lösungsmittelgemisch aus Wasser:Propylenglycol von 20:80 bis 50:50, in einer Konzentration von 5-50 Gew.-% handelt.

4. Verwendung des agronomischen Zusatzstoffes nach einem der Ansprüche 1 bis 3, **dadurch gekennzeichnet, dass** es sich um eine wässrig-alkoholische Lösung von Kaliumpropionat, vorzugsweise eine Lösung in einem Lösungsmittelgemisch aus Wasser:Propylenglycol von 20:80 bis 50:50, in einer Konzentration von 5-50 Gew.-% handelt.

5. Verwendung des agronomischen Zusatzstoffes nach einem der Ansprüche 1 bis 3, **dadurch gekennzeichnet, dass** es sich um eine wässrig-alkoholische Lösung von Nisin, vorzugsweise eine Lösung in einem Lösungsmittelgemisch aus Wasser:Propylenglycol von 20:80 bis 50:50, in einer Konzentration von 5-50 Gew.-% handelt.

6. Verwendung des agronomischen Zusatzstoffes nach einem der Ansprüche 1 bis 3, **dadurch gekennzeichnet, dass** es sich um eine wässrig-alkoholische Lösung von Kaliumbenzoat, vorzugsweise eine Lösung in einem Lösungsmittelgemisch aus Wasser:Propylenglycol von 20:80 bis 50:50, in einer Konzentration von 5-50 Gew.-% handelt.

7. Verwendung des agronomischen Zusatzstoffes nach einem der Ansprüche 1 bis 3, **dadurch gekennzeichnet, dass** es sich um eine wässrig-alkoholische Lösung von Pulcherriminsäure oder Pulcherrimin, vorzugsweise eine Lösung in einem Lösungsmittelgemisch aus Wasser:Propylenglycol von 20:80 bis 50:50, in einer Konzentration von 5-50 Gew.-% handelt.

## Revendications

1. Utilisation d'une solution d'un composé à activité biostatique choisi parmi le sorbate de potassium, le propionate de potassium, la nisine, le benzoate de potassium et l'acide pulcherriminique ou son chélate de fer, la pulcherrimine en tant qu'additif agronomique pour des produits engrais comprenant de l'urée, des inhibiteurs d'uréase et des biostimulants, de tels biostimulants étant toute substance individuelle ou tout mélange de substances dont l'application stimule des processus biologiques et, par conséquent, améliore la disponibilité de nutriments et optimise l'absorption de ceux-ci par les plantes, dans laquelle les biostimulants sont choisis parmi les acides aminés, les saccharides, les acides humiques ou fulviques, les acides organiques, les extraits de levure, les extraits d'algues et les combinaisons de ceux-ci.

2. Utilisation de l'additif agronomique, selon la revendication 1, **caractérisée en ce que** sa quantité est comprise entre 15 et 25 mg par kg de produit engrais comprenant de l'urée, des inhibiteurs d'uréase et des biostimulants.

3. Utilisation de l'additif agronomique, selon l'une quelconque des revendications précédentes, **caractérisée en ce qu'**il s'agit d'une solution hydroalcoolique de sorbate de potassium, de préférence d'une solution dans un mélange solvant d'eau:propylèneglycol à 20:80 à 50:50, en une concentration de 5 à 50 % en poids.

4. Utilisation de l'additif agronomique, selon l'une quelconque des revendications 1 à 3, **caractérisée en ce qu'**il s'agit d'une solution hydroalcoolique de propionate de potassium, de préférence d'une solution dans un mélange solvant d'eau:propylèneglycol à 20:80 à 50:50, en une concentration de 5 à 50 % en poids.

5. Utilisation de l'additif agronomique, selon l'une quelconque des revendications 1 à 3, **caractérisée en ce qu'**il s'agit d'une solution hydroalcoolique de nisine, de préférence d'une solution dans un mélange solvant d'eau:propylèneglycol à 20:80 à 50:50, en une concentration de 5 à 50 % en poids.

6. Utilisation de l'additif agronomique, selon l'une quelconque des revendications 1 à 3, **caractérisée en ce qu'**il s'agit d'une solution hydroalcoolique de benzoate de potassium, de préférence d'une solution dans un mélange solvant d'eau:propylèneglycol à 20:80 à 50:50, en une concentration de 5 à 50 % en poids.

7. Utilisation de l'additif agronomique, selon l'une quelconque des revendications 1 à 3, **caractérisée en ce qu'**il s'agit d'une solution hydroalcoolique d'acide pulcherriminique ou de pulcherrimine, de préférence d'une solution dans un mélange solvant d'eau:propylèneglycol à 20:80 à 50:50, en une concentration de 5 à 50 % en poids.
